(19) Europäisches Patentamt
European Patent Office
Office européen des brevets

(11) **EP 4 753 006 A1**

(12) **EUROPEAN PATENT APPLICATION**
published in accordance with Art. 153(4) EPC

(43) Date of publication:
**03.06.2026 Bulletin 2026/23**

(51) International Patent Classification (IPC):
**H01M 10/0567** (2010.01)   **H01M 10/0525** (2010.01)
**H01M 4/13** (2010.01)

(21) Application number: 23950565.4

(22) Date of filing: 26.12.2023

(52) Cooperative Patent Classification (CPC):
Y02E 60/10

(86) International application number:
**PCT/CN2023/141875**

(87) International publication number:
**WO 2025/044000 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.08.2023 CN 202311121699

(71) Applicant: **Sunwoda Mobility Energy Technology
Co., Ltd.
Shenzhen, Guangdong 518107 (CN)**

(72) Inventors:
• **QIAO, Feiyan**
  **Shenzhen, Guangdong 518107 (CN)**
• **LIU, Si**
  **Shenzhen, Guangdong 518107 (CN)**
• **LV, Guoxian**
  **Shenzhen, Guangdong 518107 (CN)**

(74) Representative: **Metida
Gyneju str. 16
01109 Vilnius (LT)**

(54) **SECONDARY BATTERY AND ELECTRIC DEVICE**

(57)    Provided herein is a secondary battery and an electrical device. The secondary battery satisfies a relationship of formula (1):

$$0.15 \leq \frac{Me. \times A \times \sigma \times \alpha}{\eta \times PD} \leq 10 \quad (1).$$

Me. represents an electrolyte retention coefficient of an electrolyte in the secondary battery in g/Ah; A represents a mass ratio of a fluorine-containing additive to a cyclic carbonate additive in the electrolyte; $\sigma$ represents an electric conductivity of the electrolyte in mS/cm; $\alpha$ represents a porosity of a positive electrode plate; $\eta$ represents a viscosity of the electrolyte at 25°C in mPa·s; PD represents a compaction density of a positive electrode active material layer in g/cm$^3$. The electrolyte retention coefficient of the battery, the positive electrode plate, and the electrolyte additives are all controlled, so as to satisfy specific requirements, thereby significantly improving the fast-charging performance and low-temperature discharging performance of the secondary battery.

EP 4 753 006 A1

**Description**

**CROSS-REFERENCE TO RELATED APPLICATION**

This disclosure claims the benefit of Chinese patent application No. 202311121699.2, filed on August 30, 2023, which is incorporated herein by reference in its entirety.

**TECHNICAL FIELD**

This disclosure relates to the field of battery technology, particularly to a secondary battery and an electrical device.

**BACKGROUND**

Secondary batteries, such as lithium-ion batteries, have higher energy density, excellent cycle performance, no memory effect, and are widely used in portable electronic products and new energy vehicles. With the continuous development of new energy vehicles, consumer demand for fast charging is becoming increasingly urgent. The development of battery fast-charging technology and the reduction of charging time can greatly improve user experience, which are crucial for expanding the new energy vehicle market.

The development of fast-charging technology is influenced by multiple factors. Ions are released from a positive electrode into an electrolyte, pass through a separator, then enter a negative electrode for insertion. The rapid migration of a large number of ions requires the electrolyte to have high kinetic performance, which ensures low resistance during the mass transfer process.

Therefore, it is necessary to develop an electrolyte with high kinetic performance, matching the positive electrode material and the negative electrode material, namely having higher ionic conductivity, better wettability, and lower viscosity.

**SUMMARY**

To address the shortcomings of existing secondary batteries in fast-charging cycle performance and low-temperature discharging performance, in this disclosure, the electrolyte of the secondary battery is optimized. The electrolyte retention coefficient of the battery, the positive electrode plate and the electrolyte additives are controlled so as to satisfy specific requirements, thereby significantly improving the fast-charging performance and low-temperature discharging performance of the secondary battery.

To achieve the above objective, in a first aspect of this disclosure, provided herein is a secondary battery, including a positive electrode plate, a negative electrode plate and an electrolyte, where the positive electrode plate includes a positive electrode current collector and a positive electrode active material layer arranged on at least one surface of the positive electrode current collector; the electrolyte includes an organic solvent, a lithium salt and an additive, the additive includes a fluorine-containing additive and a cyclic carbonate additive;

the secondary battery satisfies a relationship as follows:

$$0.15 \leq \frac{Me. \times A \times \sigma \times \alpha}{\eta \times PD} \leq 10$$

where Me. represents an electrolyte retention coefficient of the electrolyte in the secondary battery in g/Ah, i.e., a ratio of a total mass of the electrolyte to a nominal capacity of the secondary battery;

A represents a mass ratio of the fluorine-containing additive to the cyclic carbonate additive in the electrolyte;

$\sigma$ represents an electric conductivity of the electrolyte in mS/cm;

$\alpha$ represents a porosity of the positive electrode plate;

$\eta$ represents a viscosity of the electrolyte at 25°C in mPa·s;

PD represents a compaction density of the positive electrode active material layer in g/cm$^3$.

In some embodiments, the Me. is in a range of 2 g/Ah to 5 g/Ah.

In some embodiments, the $\sigma$ is in a range of 7 mS/cm to 13 mS/cm.

In some embodiments, the $\eta$ is in a range of 3 mPa·s to 5 mPa·s.

In some embodiments, the A is in a range of 0.1 to 20.

In some embodiments, the PD is in a range of 3 g/cm$^3$ to 4.2 g/cm$^3$.

In some embodiments, the $\alpha$ is in a range of 0.1 to 0.5.

In some embodiments, the lithium salt in the electrolyte includes at least one selected from the group consisting of lithium hexafluorophosphate, and lithium bis(oxalato)borate.

In some embodiments, the organic solvent in the electrolyte includes at least one selected from the group consisting of ethylene carbonate, propylene carbonate, butylene carbonate, dimethyl carbonate, ethyl methyl carbonate, diethyl carbonate, methylpropyl carbonate, diphenyl carbonate, ethyl acetate, propyl acetate, methyl propionate, ethyl propionate, propyl propionate, methyl butyrate, ethyl butyrate, fluoroethyl acetate, fluoroether, $\gamma$-butyrolactone, acetonitrile, and sulfolane.

In some embodiments, the fluorine-containing additive includes at least one selected from the group consisting of lithium fluorosulfonate, lithium difluorophosphate, and lithium difluoro(oxalato)borate. Based on a mass of the electrolyte, a mass percentage of the fluorine-containing additive is in a range of 0.2% to 2.0%.

In some embodiments, the cyclic carbonate additive includes at least one selected from the group consisting of vinylene carbonate, and vinyl ethylene carbonate. Based on a mass of the electrolyte, a mass percentage of the cyclic carbonate additive is in a range of 0.05% to 3%.

In some embodiments, the additive further includes a silicon-containing additive, the silicon-containing additive includes at least one selected from the group consisting of tris(trimethylsilyl)phosphate, tris(trimethylsilyl)phosphite, tris(trimethylsilyl)borate, trimethylfluorosilane, and heptamethyldisilazane. Based on a mass of the electrolyte, a mass percentage of the silicon-containing additive is in a range of 0.1% to 2%.

In some embodiments, the additive of the electrolyte includes a fluorine-containing additive, a silicon-containing additive and a cyclic carbonate additive, and the secondary battery satisfies a relationship as follows:

$$0.55 \leq \frac{Me.\times A'\times\sigma\times\alpha}{\eta\times PD} \leq 18.5;$$

where A' represents a ratio of a total mass of the fluorine-containing additive and the silicon-containing additive to the mass of the cyclic carbonate additive in the electrolyte.

In some embodiments, the electrolyte further includes a sulfur-containing additive; the sulfur-containing additive includes at least one selected from the group consisting of 1,3-propanesultone, ethylene sulfate, butylene sulfite, and methylene methanedisulfonate. Based on a mass of the electrolyte, a mass percentage of the sulfur-containing additive is in a range of 0.05% to 3%.

In some embodiments, in the positive electrode active material layer, a positive electrode active material includes a compound with a formula of $Li_xNi_aCo_bM_cZ_{1-a-b-c}O_2$, $0.95 \leq x \leq 1.2$, $0 < a < 1$, $0 < b < 1$, $0 < c < 1$, $a + b + c \leq 1$; where M includes either or both of Mn and Al; Z includes at least one selected from the group consisting of Fe, Zr, Mg, Cu, Zn, Al, Sn, B, Ga, Cr, Sr, V, and Ti.

In a second aspect of this disclosure, provided herein is an electrical device, including the above secondary battery.

Compared with the prior art, this disclosure has the following beneficial effects:

In this disclosure, the electrolyte retention coefficient of the battery, intrinsic parameters of the positive electrode plate, and intrinsic parameters of the electrolyte are co-designed, rationalizing a correlation among the above parameters, thereby significantly improving the fast-charging performance and low-temperature discharging performance of the secondary battery.

## DETAILED DESCRIPTION

To better illustrate the objective, technical solution and advantages of this disclosure, the following embodiments are provided to illustrate this disclosure, but are not intended to limit the scope of this disclosure in any form. Unless otherwise specified, the reagents, methods and equipment used in this disclosure are conventional reagents, methods and equipment in the technical field. Unless otherwise specified, the reagents and materials used in this disclosure are purchased from the market.

In an embodiment of this disclosure, provided herein is a secondary battery, including a positive electrode plate, a negative electrode plate and an electrolyte, where the positive electrode plate includes a positive electrode current collector and a positive electrode active material layer arranged on at least one surface of the positive electrode current collector; the electrolyte includes an organic solvent, a lithium salt and an additive, the additive includes a fluorine-containing additive and a cyclic carbonate additive;

the secondary battery satisfies a relationship as follows:

$$0.15 \leq \frac{Me. \times A \times \sigma \times \alpha}{\eta \times PD} \leq 10$$

where Me. represents an electrolyte retention coefficient of the electrolyte in the secondary battery in g/Ah;

A represents a mass ratio of the fluorine-containing additive to the cyclic carbonate additive in the electrolyte;

σ represents an electric conductivity of the electrolyte in mS/cm;

α represents a porosity of the positive electrode plate;

η represents a viscosity of the electrolyte at 25°C in mPa·s;

PD represents a compaction density of the positive electrode active material layer in g/cm$^3$.

In a secondary battery, the electrolyte serves as an ion-conducting medium and has a significant impact on the secondary conduction performance during charging and discharging, thereby affecting the charging and discharging performance of the secondary battery. During the charging and discharging of the secondary battery, on one hand, the secondary transmission rate needs to be increased; on the other hand, the stability of the electrode/electrolyte interface needs to be improved, thereby preventing severe decomposition of the electrolyte during cycling, which causes an increase in interface impedance and affects the fast-charging window for preventing lithium plating. An SEI film can be formed effectively by adding a film-forming additive to the electrolyte, which reduces the occurrence of interface side reactions during cycling, but the film-forming additive often affects the low-temperature discharging performance of the battery due to the high initial impedance.

However, in this disclosure, it has been found through extensive research that the fast-charging cycle performance and low-temperature discharging performance of the secondary battery can be significantly improved by co-designing the electrolyte retention coefficient of the battery, the intrinsic parameters of the positive electrode plate, and the intrinsic parameters of the electrolyte, and rationalizing a correlation among the above parameters.

In the electrolyte of the secondary battery, the additive is an important component of the electrolyte and can be utilized to optimize the composition of the SEI film of the secondary battery, playing an important role in the performance of the secondary battery. The fluorine-containing additive can form a film on the negative electrode plate first, thereby forming an SEI film with high ionic conductivity; the cyclic carbonate additive can undergo polymerization and form a highly stable SEI film on the surface of the negative electrode plate. By reasonably controlling the composition of the additive in the electrolyte, it enables the secondary battery to simultaneously achieve good kinetic performance and long-cycle performance.

In some embodiments of this disclosure, the secondary battery satisfies a relationship as follows:

$$0.4 \leq \frac{Me. \times A \times \sigma \times \alpha}{\eta \times PD} \leq 9.$$

In some embodiments of this disclosure, a mass ratio of the fluorine-containing additive to the cyclic carbonate additive (A) is m (fluorine-containing additive) : m (cyclic carbonate additive) = 0.1 to 20. For example, the A can be any one selected from 0.1, 1, 3, 5, 8, 10, 12, 15, 17, 20 or a range composed of any two values therein.

In some embodiments of this disclosure, the A is m (fluorine-containing additive) : m (cyclic carbonate additive) = 0.8 to 5.

In some embodiments of this disclosure, the fluorine-containing additive includes at least one selected from the group consisting of lithium fluorosulfonate, lithium difluorophosphate, and lithium difluoro(oxalato)borate. Based on a mass of the electrolyte, a mass percentage of the fluorine-containing additive is in a range of 0.2% to 2.0%. For example, the mass percentage of the fluorine-containing additive can be any one selected from 0.4%, 1.0%, 1.5%, 2%, or a range composed of any two values therein.

In some embodiments of this disclosure, based on the mass of the electrolyte, the mass percentage of the fluorine-containing additive is in a range of 0.4% to 1.5%.

In some embodiments of this disclosure, the cyclic carbonate additive includes at least one selected from the group consisting of vinyl carbonate (VC) and vinyl ethylene carbonate; the cyclic carbonate further includes vinyl carbonate (VC), and the secondary battery with VC has better fast-charging cycle performance.

In some embodiments of this disclosure, based on a mass of the electrolyte, a mass percentage of the cyclic carbonate additive is in a range of 0.05% to 3%. For example, the mass percentage of the cyclic carbonate additive can be any one selected from 0.1%, 0.3%, 2.8%, 3%, or a range composed of any two values therein.

In some embodiments of this disclosure, based on the mass of the electrolyte, the mass percentage of the cyclic carbonate additive is in a range of 0.1% to 2.8%.

In some embodiments of this disclosure, the electrolyte further includes a silicon-containing additive. The silicon-containing additive can capture hydrofluoric acid (HF) in the electrolyte, thereby improving the stability of the electrolyte and inhibiting the damage of HF to the interface film. The silicon-containing additive includes at least one selected from the group consisting of tris(trimethylsilyl)phosphate (TMSP), tris(trimethylsilyl)phosphite (TMSPi), tris(trimethylsilyl)borate, trimethylfluorosilane, and heptamethyldisilazane. The silicon-containing additive further includes tris(trimethylsilane) phosphate (TMSP). The secondary battery with TMSP has better fast-charging cycle performance.

In some embodiments of this disclosure, based on a mass of the electrolyte, a mass percentage of the silicon-containing additive is in a range of 0.1% to 2%. For example, the mass percentage of the silicon-containing additive can be any one selected from 0.3%, 0.3%, 0.5%, 1.0%, 1.5%, 2%, or a range composed of any two values therein.

In some embodiments of this disclosure, based on the mass of the electrolyte, the mass percentage of the silicon-containing additive is in a range of 0.3% to 1%.

In some embodiments of this disclosure, the additive in the electrolyte of the secondary battery includes the fluorine-containing additive, the silicon-containing additive and the cyclic carbonate additive, where a ratio of a total mass of the fluorine-containing additive and the silicon-containing additive to the mass of the cyclic carbonate additive (A') is = 0.17 to 40. When the secondary battery satisfies a relationship as follows: $0.55 \leq \dfrac{Me. \times A' \times \sigma \times \alpha}{\eta \times PD} \leq 18.5$, and the above three electrolyte additives are added and a ratio thereof is controlled within an appropriate range, a SEI film with an appropriate thickness, a good stability and a low impedance can be formed, thereby enabling the secondary battery to have better fast-charging cycle performance and low-temperature discharging performance.

In some embodiments of this disclosure, the secondary battery satisfies a relationship as follows:

$$0.7 \leq \frac{Me. \times A' \times \sigma \times \alpha}{\eta \times PD} \leq 18.$$

In some embodiments of this disclosure, the electrolyte of the secondary battery further includes a sulfur-containing additive, and the sulfur-containing additive includes at least one selected from the group consisting of 1,3-propanesultone, ethylene sulfate, butylene sulfite, and methylene methanedisulfonate.

In some embodiments of this disclosure, based on a mass of the electrolyte, a mass percentage of the sulfur-containing additive is in a range of 0.05% to 3%. For example, the mass percentage of the sulfur-containing additive can be any one selected from 0.05%, 0.1%, 0.3%, 0.5%, 0.8%, 1%, 1.2%, 1.5%, 1.8%, 2%, 2.2%, 2.5%, 2.8%, 3%, or a range composed of any two values therein.

In some embodiments of this disclosure, the $\sigma$ is in a range of 7 mS/cm to 13 mS/cm. For example, the $\sigma$ can be any one selected from 7 mS/cm, 7.5 mS/cm, 8.05 mS/cm, 8.30 mS/cm, 8.80 mS/cm, 9.5 mS/cm, 11.5 mS/cm, 13 mS/cm, or a range composed of any two values therein. The higher the electric conductivity, the faster the secondary transmission rate in the battery, which is conducive to the improvement of fast-charging performance. However, it should be noted that the electric conductivity of the electrolyte is mainly affected by a concentration of the lithium salt and the solvent composition. Therefore, when the electric conductivity of the electrolyte is within the above range, it is more conducive to the fast-charging cycle performance and long cycle life of the secondary battery.

In some embodiments of this disclosure, the Me. is in a range of 2 g/Ah to 5 g/Ah. For example, the Me. can be any one selected from 2.0 g/Ah, 2.3 g/Ah, 2.6 g/Ah, 3 g/Ah, 3.5 g/Ah, 4.0 g/Ah, 4.5 g/Ah, 5.0 g/Ah, or a range composed of any two values therein. By controlling the electrolyte retention coefficient of the electrolyte within the above reasonable range, the cycle performance of the battery can be further improved.

It should be noted that in this disclosure, the electrolyte retention coefficient represents to a ratio of a total mass of the electrolyte to the nominal capacity of the secondary battery, where the nominal capacity is measured by the following method: the secondary battery is placed at 25°C, charged at a 1C constant current to 4.35V, then charged at a constant voltage until the cutoff current is 0.05C, stood for 10 minutes, then discharged at 1C constant current to 2.8V, and the discharge capacity at this time is recorded as the nominal capacity.

In some embodiments of this disclosure, the $\eta$ is in a range of 3 mPa·s to 5 mPa·s. For example, the $\eta$ can be any one selected from 3 mPa·s, 3.5 mPa·s, 4 mPa·s, 4.5 mPa·s, 5 mPa·s, or a range composed of any two values therein. When the viscosity of the electrolyte is within the above range, it can further ensure that the secondary battery does not undergo lithium deposition under a high-rate charging condition.

In addition, the intrinsic parameters of the positive electrode plate further affect the performance of the battery. For example, a higher compaction density of the positive electrode active material layer on the positive electrode plate leads to a lower porosity of the positive electrode plate with the same volume, thereby decreasing a total amount of electrolyte absorbed by the positive electrode plate. By controlling the compaction density of the positive electrode plate within an appropriate range, the energy density of the battery can be improved while a good kinetic performance can be further achieved.

In some embodiments of this disclosure, the PD is in a range of 3 g/cm$^3$ to 4.2 g/cm$^3$. For example, the PD can be any one selected from 3 g/cm$^3$, 3.4 g/cm$^3$, 3.5 g/cm$^3$, 3.6 g/cm$^3$, 3.7 g/cm$^3$, 4 g/cm$^3$, 4.2 g/cm$^3$, or a range composed of any two values therein.

In some embodiments of this disclosure, the $\alpha$ is in a range of 0.1 to 0.5. For example, the $\alpha$ can be any one selected from 0.1, 0.2, 0.35, 0.4, 0.5, or a range composed of any two values therein.

In some embodiments of this disclosure, the organic solvent in the electrolyte includes at least one selected from the group consisting of ethylene carbonate, propylene carbonate, butylene carbonate, dimethyl carbonate, ethyl methyl carbonate, diethyl carbonate, methylpropyl carbonate, diphenyl carbonate, ethyl acetate, propyl acetate, methyl propionate, ethyl propionate, propyl propionate, methyl butyrate, ethyl butyrate, fluoroethyl acetate, fluoroether, $\gamma$-butyrolactone, acetonitrile, and sulfolane.

In some embodiments of this disclosure, the lithium salt in the electrolyte includes at least one selected from the group consisting of lithium hexafluorophosphate, and lithium bis(oxalato)borate.

In some embodiments of this disclosure, in the positive electrode active material layer, a positive electrode active material includes a compound with a formula of $Li_xNi_aCo_bM_cZ_{1-a-b-c}O_2$, $0.95 \leq x \leq 1.2$, $0 < a < 1$, $0 < b < 1$, $0 < c < 1$, $a+b+c \leq 1$; where M includes either or both of Mn and Al; Z includes at least one selected from the group consisting of Fe, Zr, Mg, Cu, Zn, Al, Sn, B, Ga, Cr, Sr, V, and Ti.

In this disclosure, further provided herein is an electrical device including the above secondary battery.

The following are specific examples of this disclosure, and the technical solution of this disclosure is further described in combination with the examples. However, this disclosure is not limited to these examples. Unless otherwise specified, the reagents, methods and equipment used in this disclosure are conventional reagents, methods and equipment in the technical field.

Example 1

A secondary battery was provided in this example, the preparation method included the following steps:

Preparation of a positive electrode plate

The positive electrode active material $LiNi_{0.6}Mn_{0.2}Co_{0.2}O_2$ (denoted as NCM622), a conductive agent (acetylene black), and a binder (PVDF) were blended in a mass ratio of 94:3:3, and 1-methyl-2-pyrrolidone (NMP) was added, uniformly dispersed to give a uniform black slurry. The slurry was applied onto a positive electrode current collector (aluminum foil), dried and cold-pressed to give a positive electrode plate with a positive electrode active material layer arranged thereon, where the compaction density of the positive electrode active material layer was 3.6 g/cm$^3$, and the porosity of the positive electrode plate was 0.35.

Preparation of a negative electrode plate

The negative electrode active material (graphite), a conductive agent (acetylene black), and a binder (SBR) were blended in a mass ratio of 94:3:3, and uniformly dispersed in deionized water to give a uniform black slurry. The slurry was applied on a negative electrode current collector (copper foil), dried and cold-pressed to give the negative electrode plate with a negative electrode active material layer arranged thereon, where the compacted density of the negative electrode active material layer was 1.55 g/cm$^3$.

Preparation of an electrolyte

At room temperature (25 $\pm$ 5°C), in a glove box filled with argon gas ($H_2O$ < 1ppm, $O_2$ < 1ppm), ethylene carbonate (EC), ethyl methyl carbonate (EMC), and diethyl carbonate (DEC) were blended in a mass ratio of 30:50:20 evenly, a blended solvent was obtained after water was removed using a 4Å molecular sieve. $LiPF_6$ was added successively to the blended solvent, continuously stirred and cooled using a dry ice to ensure that the temperature of the electrolyte did not increase by more than 2°C, then $LiPF_6$ was further added until a mass percentage of the lithium salt $LiPF_6$ in the electrolyte achieved 12.5%, finally a colorless transparent liquid was obtained. Then, based on a total mass of the electrolyte, 0.4% lithium fluorosulfonate, 0.3% tris(trimethylsilyl)phosphate, and 0.3% vinylene carbonate were added, stirred evenly to obtain the electrolyte used in this example. The electric conductivity of the electrolyte was 8.26 mS/cm, and the viscosity at 25°C was 3.9 mPa·s.

Assembly of a secondary battery

The prepared positive electrode plate, a separator (commercially available polypropylene), and the negative electrode plate were stacked in sequence, with the separator placed between the positive electrode plate and the negative electrode plate. After coiling, hot pressing and shaping, the taps were welded to give a bare cell. The bare cell was placed in an outer packaging (aluminum-plastic film), and placed in an oven at 85 ± 10°C for 24 hours. The prepared electrolyte was injected into a dried battery, and the lithium-ion battery was obtained after standing, formation, and capacity grading. The electrolyte retention coefficient of the battery was 2.6 g/Ah.

Examples 2 to 4

The preparation methods were the same as that in Example 1, except for the differences shown in Table 1.

Example 5

A secondary battery was provided in this example. The preparation method was the same as that in Example 1, except that the electrolyte was different. Specifically, EC, EMC and DEC were blended evenly in a mass ratio of EC: EMC: DEC = 30:55:15 (that is, a ratio of different solvents was changed). The electric conductivity of the obtained electrolyte was 8.5 mS/cm, and the viscosity was 3.8 mPa·s.

Example 6

A secondary battery was provided in this example. The preparation method was the same as that in Example 1, except that the electrolyte was different. Specifically, EC, EMC and DEC were blended evenly in a mass ratio of EC: EMC: DEC = 30:60:10. The electric conductivity of the obtained electrolyte was 8.7 mS/cm, and the viscosity was 3.7 mPa·s.

Example 7

A secondary battery was provided in this example. The preparation method was the same as that in Example 1, except that the electrolyte was different. Specifically, EC and EMC were blended evenly in a mass ratio of EC: EMC = 30:70. The electric conductivity of the obtained electrolyte was 8.8 mS/cm, and the viscosity was 3.6 mPa·s.

Examples 8 to 13

The preparation methods were the same as that in Example 1, except for the differences shown in Table 1.

Example 14

A secondary battery was provided in this example. The preparation method was the same as that in Example 1, except that the electrolyte was different. Specifically, 1% tris(trimethylsilyl)phosphate was added. The electric conductivity of the obtained electrolyte was 8.4 mS/cm, and the viscosity was 3.92 mPa·s.

Example 15

A secondary battery was provided in this example. The preparation method was the same as that in Example 1, except that the electrolyte was different. Specifically, 0.5% vinylene carbonate was added. The electric conductivity of the obtained electrolyte was 8.3 mS/cm, and the viscosity was 3.85 mPa·s.

Example 16

A secondary battery was provided in this example. The preparation method was the same as that in Example 1, except that the electrolyte was different. Specifically, 0.4% lithium difluorophosphate, 0.3% tris(trimethylsilyl)phosphate, and 0.3% vinylene carbonate were added. The electric conductivity of the obtained electrolyte was 8.18 mS/cm, and the viscosity was 3.95 mPa·s.

Example 17

A secondary battery was provided in this example. The preparation method was the same as that in Example 1, except that the electrolyte was different. Specifically, 1% lithium difluorophosphate, 0.3% tris(trimethylsilyl)phosphate, and 0.3% vinylene carbonate were added. The electric conductivity of the obtained electrolyte was 8.05 mS/cm, and the viscosity was 4.02 mPa·s.

Example 18

The preparation method was the same as that in Example 1, except that the electrolyte was different. Specifically, 0.4% lithium difluorophosphate, 0.5% tris(trimethylsilyl)phosphate, and 0.3% vinylene carbonate were added. The electric conductivity of the obtained electrolyte was 8.3 mS/cm, and the viscosity was 3.93 mPa·s.

Example 19

A secondary battery was provided in this example. The preparation method was the same as that in Example 1, except that the electrolyte was different. Specifically, 0.4% lithium difluorophosphate, 0.3% tris(trimethylsilyl)phosphate, and 0.5% vinylene carbonate were added. The electric conductivity of the obtained electrolyte was 8.28 mS/cm, and the viscosity was 3.94 mPa·s.

Example 20

A secondary battery was provided in this example. The preparation method was the same as that in Example 1, except that the electrolyte was different. Specifically, 0.4% lithium fluorosulfonate, and 0.3% vinylene carbonate were added. The electric conductivity of the obtained electrolyte was 8.3 mS/cm, and the viscosity was 3.87 mPa·s.

Example 21

A secondary battery was provided in this example. The preparation method was the same as that in Example 1, except that the electrolyte was different. Specifically, 1% lithium fluorosulfonate, and 0.3% vinylene carbonate were added. The electric conductivity of the obtained electrolyte was 8.49 mS/cm, and the viscosity was 3.91 mPa·s.

Example 22

A secondary battery was provided in this example. The preparation method was the same as that in Example 1, except that the electrolyte was different. Specifically, the mass percentages of components in the additives and the solvent were changed (a mass ratio of EC : EMC : DMC was 35:20:45). The specific parameters were shown in Table 1.

Example 23

A secondary battery was provided in this example. The preparation method was the same as that in Example 1, except that the electrolyte was different. Specifically, the mass percentages of components in the additives and the solvent were changed (a mass ratio of EC : EMC : DMC was 20:20:60). The specific parameters were shown in Table 1.

The preparation methods of examples and comparative examples that were not listed in this disclosure were based on that in Example 1, and obtained by changing raw materials or preparation process. The parameters of the obtained secondary batteries were shown in Table 1.

Table 1 Parameters of batteries in the Examples and the Comparative Examples

| | Positive electrode plate | | Fluorine-containing additive | TMSP | VC | Electrolyte | | | | Electrolyte retention coefficient Me. |
| --- | --- | --- | --- | --- | --- | --- | --- | --- | --- | --- |
| | Compaction density (g/cm³) | Porosity α | | | | A | A' | Electric conductivity σ (mS/cm) | Viscosity η (mPa·s) | |
| Example 1 | 3.6 | 0.35 | lithium fluorosulfonate: 0.4% | 0.30% | 0.30% | 1.33 | 2.33 | 8.26 | 3.9 | 2.6 |
| Example 2 | 3.5 | 0.4 | lithium fluorosulfonate: 0.4% | 0.30% | 0.30% | 1.33 | 2.33 | 8.26 | 3.9 | 2.6 |
| Example 3 | 3.4 | 0.45 | lithium fluorosulfonate: 0.4% | 0.30% | 0.30% | 1.33 | 2.33 | 8.26 | 3.9 | 2.6 |
| Example 4 | 3.7 | 0.3 | lithium fluorosulfonate: 0.4% | 0.30% | 0.30% | 1.33 | 2.33 | 8.26 | 3.9 | 2.6 |
| Example 5 | 3.6 | 0.35 | lithium fluorosulfonate: 0.4% | 0.30% | 0.30% | 1.33 | 2.33 | 8.50 | 3.8 | 2.6 |
| Example 6 | 3.6 | 0.35 | lithium fluorosulfonate: 0.4% | 0.30% | 0.30% | 1.33 | 2.33 | 8.70 | 3.7 | 2.6 |
| Example 7 | 3.6 | 0.35 | lithium fluorosulfonate: 0.4% | 0.30% | 0.30% | 1.33 | 2.33 | 8.80 | 3.6 | 2.6 |
| Example 8 | 3.6 | 0.35 | lithium fluorosulfonate: 0.4% | 0.30% | 0.30% | 1.33 | 2.33 | 8.26 | 3.9 | 2.55 |
| Example 9 | 3.6 | 0.35 | lithium fluorosulfonate: 0.4% | 0.30% | 0.30% | 1.33 | 2.33 | 8.26 | 3.9 | 2.5 |
| Example 10 | 3.6 | 0.35 | lithium fluorosulfonate: 0.4% | 0.30% | 0.30% | 1.33 | 2.33 | 8.26 | 3.9 | 2.45 |
| Example 11 | 3.6 | 0.35 | lithium fluorosulfonate: 1.0% | 0.30% | 0.30% | 3.33 | 4.33 | 8.43 | 3.94 | 2.6 |
| Example 12 | 3.6 | 0.35 | lithium fluorosulfonate: 1.5% | 0.30% | 0.30% | 5.00 | 6.00 | 8.70 | 3.96 | 2.6 |
| Example 13 | 3.6 | 0.35 | lithium fluorosulfonate: 0.4% | 0.50% | 0.30% | 1.33 | 3.00 | 8.35 | 3.92 | 2.6 |
| Example 14 | 3.6 | 0.35 | lithium fluorosulfonate: 0.4% | 1% | 0.30% | 1.33 | 4.67 | 8.40 | 3.92 | 2.6 |

| | Positive electrode plate | | Electrolyte | | | | | | | Electrolyte retention coefficient Me. |
|---|---|---|---|---|---|---|---|---|---|---|
| | Compaction density (g/cm$^3$) | Porosity $\alpha$ | Fluorine-containing additive | TMSP | VC | A | A' | Electric conductivity $\sigma$ (mS/cm) | Viscosity $\eta$ (mPa·s) | |
| Example 15 | 3.6 | 0.35 | lithium fluorosulfonate: 0.4% | 0.30% | 0.50% | 0.80 | 1.40 | 8.30 | 3.85 | 2.6 |
| Example 16 | 3.6 | 0.35 | lithium difluorophosphate: 0.4% | 0.30% | 0.30% | 1.33 | 2.33 | 8.18 | 3.95 | 2.6 |
| Example 17 | 3.6 | 0.35 | lithium difluorophosphate: 1.0% | 0.30% | 0.30% | 3.33 | 4.33 | 8.05 | 4.02 | 2.6 |
| Example 18 | 3.6 | 0.35 | lithium difluorophosphate: 0.4% | 0.50% | 0.30% | 1.33 | 3.00 | 8.30 | 3.93 | 2.6 |
| Example 19 | 3.6 | 0.35 | lithium difluorophosphate: 0.4% | 0.30% | 0.50% | 0.80 | 1.40 | 8.28 | 3.94 | 2.6 |
| Example 20 | 3.6 | 0.35 | lithium fluorosulfonate: 0.4% | - | 0.30% | 1.33 | 1.33 | 8.35 | 3.87 | 2.6 |
| Example 21 | 3.6 | 0.35 | lithium fluorosulfonate: 1% | - | 0.30% | 3.33 | 3.33 | 8.49 | 3.91 | 2.6 |
| Example 22 | 4.2 | 0.1 | lithium fluorosulfonate: 2.0% | 2.0% | 0.10% | 20.00 | 40.00 | 12.78 | 3.38 | 5 |
| Example 23 | 3 | 0.5 | lithium fluorosulfonate: 0.5% | - | 2.8% | 0.18 | 0.18 | 7.31 | 3.15 | 2.3 |
| Comparative Example 1 | 3.6 | 0.35 | lithium fluorosulfonate: 0.4% | 0.3% | 2.00% | 0.20 | 0.35 | 8.45 | 3.87 | 2.6 |
| Comparative Example 2 | 3.6 | 0.35 | lithium fluorosulfonate: 0.4% | 0.3% | 0.01% | 40.00 | 70.00 | 8.20 | 3.96 | 2.6 |
| Comparative Example 3 | 3.6 | 0.35 | lithium fluorosulfonate: 0.05% | 0.05% | 0.30% | 0.17 | 0.33 | 8.21 | 3.85 | 2.6 |
| Comparative Example 4 | 2.8 | 0.52 | lithium fluorosulfonate: 3.0% | 3% | 0.30% | 10.00 | 20 | 12.85 | 4.8 | 2.1 |
| Comparative Example 5 | 3.6 | 0.35 | lithium fluorosulfonate: 1.0% | - | - | - | - | 8.26 | 3.9 | 2.6 |

| | Positive electrode plate | | Electrolyte | | | | | | | Electrolyte retention coefficient Me. |
|---|---|---|---|---|---|---|---|---|---|---|
| | Compaction density (g/cm$^3$) | Porosity $\alpha$ | Fluorine-containing additive | TMSP | VC | A | A' | Electric conductivity $\sigma$ (mS/cm) | Viscosity $\eta$ (mPa·s) | |
| Comparative Example 6 | 3.6 | 0.35 | - | - | 1.00% | - | - | 8.26 | 3.9 | 2.6 |

The secondary batteries prepared in the above examples and comparative examples were tested for performances thereof. The specific test items, test methods and results were as follows:

(1) Cycle performance test: at 25°C, the secondary batteries prepared in examples and comparative examples were charged at a 3C rate (i.e., fast-charging), discharged at a 1C rate, and subjected to a charge-discharge cycling within a range of 2.8V to 4.35V. The discharge specific capacity after the first cycle (i.e., the first-cycle discharge specific capacity) and the discharge specific capacity after 500 cycles were recorded. The capacity retention rate after 500 cycles = discharge specific capacity after 500 cycles / discharge specific capacity after the first cycle * 100%. The recorded data were shown in Table 2.

(2) Low-temperature discharging performance test: the secondary batteries prepared in examples and comparative examples were placed at 25°C, charged at a 1C constant current to 4.35V, then charged at a constant voltage until the cut-off current was 0.05C, stood for 10 minutes, then discharged at a 1C constant current to 2.8V. The discharge capacity of the battery at 25°C was recorded. The secondary batteries were stood for 10 minutes. The batteries were then charged at a 1C constant current to 4.35V, then charged at a constant voltage until the cut-off current was 0.05C, and placed in a -20°C low-temperature box for 2 hours, and discharged at a 1C constant current to 2.8V. The discharge capacity at -20°C was recorded. The discharge capacity retention rate at -20°C = discharge capacity at -20°C / discharge capacity at 25°C * 100%. The recorded data were shown in Table 2.

Table 2. Performance test results of the secondary batteries prepared in examples and comparative examples

|  | $\dfrac{Me.\times A\times\sigma\times\alpha}{\eta\times PD}$ | $\dfrac{Me.\times A\,'\times\sigma\times\alpha}{\eta\times PD}$ | Capacity retention rate after 500 cycles | Discharge capacity retention rate at -20°C |
|---|---|---|---|---|
| Example 1 | 0.71 | 1.25 | 92.30% | 72.20% |
| Example 2 | 0.84 | 1.47 | 93.50% | 73.30% |
| Example 3 | 0.97 | 1.70 | 94.10% | 74.50% |
| Example 4 | 0.60 | 1.04 | 90.70% | 70.90% |
| Example 5 | 0.75 | 1.32 | 94.30% | 72.50% |
| Example 6 | 0.79 | 1.39 | 94.80% | 72.80% |
| Example 7 | 0.82 | 1.44 | 95.40% | 73.00% |
| Example 8 | 0.70 | 1.23 | 91.80% | 71.80% |
| Example 9 | 0.69 | 1.20 | 91.20% | 71.10% |
| Example 10 | 0.67 | 1.18 | 90.30% | 70.50% |
| Example 11 | 1.80 | 2.34 | 93.60% | 72.80% |
| Example 12 | 2.78 | 3.33 | 92.80% | 73.10% |
| Example 13 | 0.72 | 1.62 | 93.10% | 73.50% |
| Example 14 | 0.72 | 2.53 | 92.40% | 74.40% |
| Example 15 | 0.44 | 0.76 | 94.50% | 71.10% |
| Example 16 | 0.70 | 1.22 | 92.90% | 72.70% |
| Example 17 | 1.69 | 2.19 | 93.80% | 73.00% |
| Example 18 | 0.71 | 1.60 | 93.50% | 73.80% |
| Example 19 | 0.42 | 0.74 | 94.90% | 70.80% |
| Example 20 | 0.73 | / | 91.23% | 70.90% |
| Example 21 | 1.83 | / | 92.00% | 71.80% |
| Example 22 | 9.00 | 18.01 | 90.60% | 70.60% |
| Example 23 | 0.16 | / | 90.20% | 71.20% |
| Comparative Example 1 | 0.11 | 0.19 | 83.20% | 67.30% |

(continued)

|  | $\dfrac{Me.\times A\times\sigma\times\alpha}{\eta\times PD}$ | $\dfrac{Me.\times A\,'\times\sigma\times\alpha}{\eta\times PD}$ | Capacity retention rate after 500 cycles | Discharge capacity retention rate at -20°C |
|---|---|---|---|---|
| Comparative Example 2 | 20.94 | 36.64 | 82.30% | 72.50% |
| Comparative Example 3 | 0.09 | 0.18 | 84.80% | 69.20% |
| Comparative Example 4 | 10.44 | 20.88 | 80.30% | 65.30% |
| Comparative Example 5 | / | / | 70.35% | 55.56% |
| Comparative Example 6 | / | / | 75.61% | 50.26% |

As can be seen from the above results, that:

By comparing examples with comparative examples, the performance of batteries is affected by the characteristics of both the positive electrode plate and the negative electrode plate in different systems, including their reversible capacity, electrode compaction density, and the particle size and distribution of the active material particles, thereby influencing the actual energy density of the batteries.

By comparing Example 1, Examples 11 to 19 with Comparative Example 1, it is found that when the value of $\dfrac{Me.\times A\times\sigma\times\alpha}{\eta\times PD}$ is lower than 0.15, the secondary battery exhibits poor fast-charging cycle performance and poor low-temperature discharging performance. This is mainly due to the low A value, where a content of vinyl carbonate in the electrolyte is too high, which leads to an excessively thick initial-formed film, increased impedance, and adversely affected interfacial kinetic behavior at both normal temperature and low temperature, resulting in poor fast-charging cycle performance and poor low-temperature discharging performance during cycling.

By comparing Comparative Example 2, Comparative Example 4 with Example 1, it is found that when the value of $\dfrac{Me.\times A\times\sigma\times\alpha}{\eta\times PD}$ exceeds 10, the secondary battery exhibits better low-temperature discharging performance, but meanwhile, the fast-charging cycle capacity retention rate significantly decreases. This is mainly due to the high A value, where the content of vinylene carbonate in the electrolyte is low, which cannot ensure the formation of a stable SEI film.

By comparing Example 1 with Examples 2 to 4, it is found that when the compaction density of the positive electrode plate is too high, the fast-charging cycle performance will be deteriorated. This is mainly because the excessively high compaction density reduces the porosity of the positive electrode plate, impedes electrolyte uptake by the positive electrode plate, and increases the difficulty of lithium-ion deintercalation, thereby deteriorating the fast-charging cycle performance and low-temperature discharging performance of the secondary battery.

By comparing Example 1 with Examples 8 to 10, it is found that a reasonable increase of the electrolyte retention coefficient within a range defined by the formula is conductive to improving the cycle performance of the secondary battery.

By comparing Example 1 with Examples 5 to 7, it is found that by reasonably adjusting a ratio of the solvents, it can increase the electric conductivity of the electrolyte and reduce the viscosity of the electrolyte, which is conductive to improving the ambient temperature fast-charging cycle performance.

By comparing Example 1 with Comparative Example 3, it is found that when the contents of lithium fluorosulfonate and tri-(trimethylsilyl) phosphate additives are too low, the secondary battery does not have a good fast-charging cycle capacity retention rate or a good low-temperature discharge capacity retention rate, indicating that lithium fluorosulfonate and tris(trimethylsilyl)phosphate additives are significantly associated with the enhanced fast-charging cycle performance and low-temperature cycle performance.

Finally, it should be noted that the above embodiments are only used to illustrate the technical solution of this disclosure and do not limit the protection scope of this disclosure. Although the detailed description of this disclosure is provided with reference to the preferred embodiments, ordinary technicians in the field should understand that the technical solution of this disclosure can be modified or substituted without departing from the essence and scope of the technical solution.

**Claims**

1.   A secondary battery, comprising a positive electrode plate, a negative electrode plate and an electrolyte, wherein the positive electrode plate comprises a positive electrode current collector and a positive electrode active material layer arranged on at least one surface of the positive electrode current collector; the electrolyte comprises an organic solvent, a lithium salt and an additive, the additive comprises a fluorine-containing additive and a cyclic carbonate additive; wherein the secondary battery satisfies a relationship as follows:

$$0.15 \le \frac{Me.\times A \times \sigma \times \alpha}{\eta \times PD} \le 10;$$

and

wherein Me. represents an electrolyte retention coefficient of the electrolyte in the secondary battery in g/Ah;
A represents a mass ratio of the fluorine-containing additive to the cyclic carbonate additive in the electrolyte;
$\sigma$ represents an electric conductivity of the electrolyte in mS/cm;
$\alpha$ represents a porosity of the positive electrode plate;
$\eta$ represents a viscosity of the electrolyte at 25°C in mPa·s; and
PD represents a compaction density of the positive electrode active material layer in g/cm$^3$.

2. The secondary battery according to claim 1, wherein the electrolyte satisfies one or more of the following conditions:

(1) the Me. is in a range of 2 g/Ah to 5 g/Ah;
(2) the $\sigma$ is in a range of 7 mS/cm to 13 mS/cm;
(3) the $\eta$ at 25°C is in a range of 3 mPa·s to 5 mPa·s; or
(4) the A is in a range of 0.1 to 20.

3. The secondary battery according to claim 1, wherein one or more of the following conditions is satisfied:

(1) the PD is in a range of 3 g/cm$^3$ to 4.2 g/cm$^3$; or
(2) the $\alpha$ is in a range of 0.1 to 0.5.

4. The secondary battery according to claim 1, wherein the electrolyte satisfies one or more of the following conditions:

(1) the lithium salt comprises at least one selected from the group consisting of lithium hexafluorophosphate, and lithium bis(oxalato)borate;
(2) the fluorine-containing additive comprises at least one selected from the group consisting of lithium fluorosulfonate, lithium difluorophosphate, and lithium difluoro(oxalato)borate; or
(3) the cyclic carbonate additive comprises at least one selected from the group consisting of vinylene carbonate, and vinyl ethylene carbonate.

5. The secondary battery according to any one of claims 1 to 4, wherein, based on a mass of the electrolyte, an amount of the additive satisfies one or more of the following conditions:

(1) a mass percentage of the fluorine-containing additive is in a range of 0.2% to 2.0%; or
(2) a mass percentage of the cyclic carbonate additive is in a range of 0.05% to 3%.

6. The secondary battery according to any one of claims 1 to 4, wherein the additive further comprises a silicon-containing additive, and the secondary battery satisfies a relationship as follows:

$$0.55 \le \frac{Me.\times A' \times \sigma \times \alpha}{\eta \times PD} \le 18.5;$$

wherein A' represents a ratio of a total mass of the fluorine-containing additive and the silicon-containing additive to the mass of the cyclic carbonate additive in the electrolyte.

7. The secondary battery according to claim 6, wherein the silicon-containing additive comprises at least one selected from the group consisting of tris(trimethylsilyl)phosphate, tris(trimethylsilyl)phosphite, tris(trimethylsilyl)borate, trimethylfluorosilane, and heptamethyldisilazane;
and/or, based on the mass of the electrolyte, a mass percentage of the silicon-containing additive is in a range of 0.1% to 2%.

8. The secondary battery according to any one of claims 1 to 4, wherein the electrolyte further comprises a sulfur-containing additive, and a mass percentage of the sulfur-containing additive in the electrolyte is in a range of 0.05% to 3%; the sulfur-containing additive comprises at least one selected from the group consisting of 1,3-propanesultone, ethylene sulfate, butylene sulfite, and methylene methanedisulfonate.

9. The secondary battery according to any one of claims 1 to 4, wherein in the positive electrode active material layer, a positive electrode active material comprises a compound with a formula of $Li_xNi_aCo_bM_cZ_{1-a-b-c}O_2$, $0.95 \leq x \leq 1.2$, $0 < a < 1$, $0 < b < 1$, $0 < c < 1$, $a + b + c \leq 1$; wherein, M comprises either or both of Mn and Al; Z comprises at least one selected from the group consisting of Fe, Zr, Mg, Cu, Zn, Al, Sn, B, Ga, Cr, Sr, V, and Ti.

10. The secondary battery according to any one of claims 1 to 4, wherein the secondary battery satisfies a relationship as follows:

$$0.4 \leq \frac{Me. \times A \times \sigma \times \alpha}{\eta \times PD} \leq 9.$$

11. The secondary battery according to claim 6, wherein A' = 0.17 to 40; and/or, the secondary battery satisfies a relationship as follows: $0.7 \leq \dfrac{Me. \times A' \times \sigma \times \alpha}{\eta \times PD} \leq 18$.

12. The secondary battery according to any one of claims 1 to 4, wherein the organic solvent in the electrolyte comprises at least one selected from the group consisting of ethylene carbonate, propylene carbonate, butylene carbonate, dimethyl carbonate, ethyl methyl carbonate, diethyl carbonate, methylpropyl carbonate, diphenyl carbonate, ethyl acetate, propyl acetate, methyl propionate, ethyl propionate, propyl propionate, methyl butyrate, ethyl butyrate, fluoroethyl acetate, fluoroether, γ-butyrolactone, acetonitrile, and sulfolane.

13. An electrical device, comprising the secondary battery according to any one of claims 1 to 12.

## INTERNATIONAL SEARCH REPORT

| | International application No. |
|---|---|
| | **PCT/CN2023/141875** |

**A.    CLASSIFICATION OF SUBJECT MATTER**

H01M10/0567(2010.01)i;  H01M10/0525(2010.01)i;  H01M4/13(2010.01)i

According to International Patent Classification (IPC) or to both national classification and IPC

**B.    FIELDS SEARCHED**

Minimum documentation searched (classification system followed by classification symbols)

IPC:  H01M10/-;  H01M4/-

Documentation searched other than minimum documentation to the extent that such documents are included in the fields searched

Electronic data base consulted during the international search (name of data base and, where practicable, search terms used)

CNTXT, VCN, ENTXTC, CNKI, ISI_Web of Science: 二次电池, 正极极片, 负极极片, 电解液, 集流体, 活性物质层, 有机溶剂, 锂盐, 添加剂, 含氟添加剂, 环状碳酸酯, 保液系数, 电导率, 孔隙率, 粘度, 压实密度, secondary battery, positive electrode sheet, negative electrode sheet, electrolytic solution, current collector, active material layer, organic solvent, lithium salt, additive, fluorine-containing additive, cyclic carbonate, retention coefficient, conductivity, porosity, viscosity, compaction density

**C.    DOCUMENTS CONSIDERED TO BE RELEVANT**

| Category* | Citation of document, with indication, where appropriate, of the relevant passages | Relevant to claim No. |
|---|---|---|
| PX | CN 117059899 A (SUNWODA POWER TECHNOLOGY CO., LTD.) 14 November 2023 (2023-11-14)<br>   claims 1-10, and description, paragraphs [0047]-[0048], [0059]-[0061], and [0071] | 1-13 |
| A | CN 115548445 A (SUNWODA ELECTRIC VEHICLE BATTERY CO., LTD.) 30 December 2022 (2022-12-30)<br>   entire document | 1-13 |
| A | CN 116387628 A (SUNWODA ELECTRIC VEHICLE BATTERY CO., LTD.) 04 July 2023 (2023-07-04)<br>   entire document | 1-13 |
| A | CN 115917825 A (CONTEMPORARY AMPEREX TECHNOLOGY CO., LTD.) 04 April 2023 (2023-04-04)<br>   entire document | 1-13 |

☑ Further documents are listed in the continuation of Box C.    ☑ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **18 April 2024** | **24 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/141875** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 109802179 A (DONGGUAN SHANSHAN BATTERY MATERIALS CO., LTD. et al.) 24 May 2019 (2019-05-24) <br> entire document | 1-13 |
| A | WO 2023035298 A1 (DONGGUAN SHANSHAN BATTERY MATERIALS CO., LTD. et al.) 16 March 2023 (2023-03-16) <br> entire document | 1-13 |
| A | WO 2023122966 A1 (NINGDE AMPEREX TECHNOLOGY LTD.) 06 July 2023 (2023-07-06) <br> entire document | 1-13 |

Form PCT/ISA/210 (second sheet) (July 2022)

**INTERNATIONAL SEARCH REPORT**
Information on patent family members

International application No.

**PCT/CN2023/141875**

| Patent document cited in search report | | | Publication date (day/month/year) | Patent family member(s) | Publication date (day/month/year) |
|---|---|---|---|---|---|
| CN | 117059899 | A | 14 November 2023 | None | |
| CN | 115548445 | A | 30 December 2022 | None | |
| CN | 116387628 | A | 04 July 2023 | None | |
| CN | 115917825 | A | 04 April 2023 | None | |
| CN | 109802179 | A | 24 May 2019 | None | |
| WO | 2023035298 | A1 | 16 March 2023 | None | |
| WO | 2023122966 | A1 | 06 July 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311121699